# EUROPÄISCHE PATENTSCHRIFT

(11) **EP 0 953 809 B1**
(45) Veröffentlichungstag und Bekanntmachung des Hinweises auf die Patenterteilung: **30.06.2004**
(21) Anmeldenummer: 99250133.8
(22) Anmeldetag: 23.04.1999
(51) Int. Cl.: F24D 3/12

(54) **Tür mit integrierten Flächen zur Übertragung von Wärme**
Door with integrated heating surfaces
Porte avec surfaces chauffantes integrées

(30) Priorität: 30.04.1998 DE 19820184
(43) Veröffentlichungstag der Anmeldung: 03.11.1999
(73) Patentinhaber: Rode, Bernhard, Dipl.-Ing., 10789 Berlin (DE); Schulze-Karal, Christian, Dr.-Ing., 14165 Berlin (DE)
(72) Erfinder: Rode, Bernhard, Dipl.-Ing., 10789 Berlin (DE); Schulze-Karal, Christian, Dr.-Ing., 14165 Berlin (DE)
(74) Vertreter: Meissner, Peter E., Dipl.-Ing.

(56) Entgegenhaltungen:
- FR-A- 2 030 520
- FR-A- 2 085 473

## Beschreibung

Es ist bekannt, den Wärmeverlust und den Kältebedarf von Räumen in Gebäuden mit Heiz- und Kühlsystemen zu decken, die mit Wärmeaustauschern arbeiten, die jeweils in den zu temperierenden Räumen installiert sind. Solche Wärmeaustauscher lassen sich unterteilen in:
a) freie Wärmeübertragungsflächen, wie
   - Rohrheizkörper;
   - Rippenrohrheizkörper;
   - Flachheizkörper (Plattenheizkörper, Flachradiatoren, Konvektorheizkörper, Strahlplatten);
   - Radiatoren;
   - Rohrradiatoren;
   - Konvektoren;
   - Sockelheizkörper
   und
b) im Baukörper integrierte Wärmeübertragungsflächen, wie
   - Deckenheizung oder Kühldecke;
   - Fußbodenheizung;
   - Wandheizung;
   - Fußleistenheizung;
   - elektrisch heizende Tür;
   - Fensterrahmen-Heizelement;
   - Türrahmenheizung.

Freie Wärmeübertragungsflächen werden als Heiz- oder Kühlkörper im zu temperierenden Raum mehr oder weniger sichtbar, häufig unter der Fensterbrüstung installiert. Bei einer Deckenheizung und einer Kühldecke sind die Wärmeübertragungsflächen in der Decke angeordnet. Bei der Deckenheizung wird der größte Teil der Wärme von der Decke durch Strahlung abgegeben. Die von der beheizten Decke ausgehenden Wärmestrahlen treffen auf die übrigen Wandflächen auf, die dadurch erwärmt werden und ihrerseits wieder Wärme teils durch Strahlung teils durch Konvektion abgegeben.
Bei einer Fußbodenheizung sind die Wärmeübertragungsflächen im Beton, Estrich oder in den Hohlräumen des Fußbodens verlegt.
Bei einer Wandheizung (Paneelheizung) sind die Wärmeübertragungsflächen in den Wänden, insbesondere in Außenwänden unter Fensterbrüstungen, angebracht.
Bei einer Fußleistenheizung sind die vom Wärmeträger (Warmwasser) durchflossenen Wärmeübertragungsflächen in den Fußleistenkörper integriert.
Bei der elektrisch heizenden Tür nach DE 26 17 701 A 1 wird das Türblatt von Luft durchströmt, die dabei von einer Widerstandsheizung erwärmt wird. Dabei tritt die Luft durch eine Öffnung im unteren Drittel des Türblattes in die Tür ein, durchströmt sie von unten nach oben und tritt aus einer Öffnung oben am Türblatt wieder aus.
Gelegentlich werden im Rahmen von Fenstern oder Fassadenelementen Heizrohre untergebracht (Fensterrahmen-Heizelement) oder es wird der Rahmen teilweise von Wasser durchflossen (Gartner-Fassade). Diese Art der Heizkörper soll die Strahlung der Fenster-scheibe kompensieren, um die Behaglichkeit zu erhöhen.
Im Gebrauchsmuster DE 91 08 666 U1 ist eine mit Warmwasser oder elektrischem Strom arbeitende Türrahmenheizung (im Sinne einer Türzargenheizung) vorgeschlagen worden. Bei dieser Einrichtung wird die Wärme hauptsächlich über die Oberfläche der beheizten Türzarge an den Raum abgegeben. Zusätzlich wird ein Teil der Wärme an den Raum über das Türblatt abgegeben, das über Scharniere (Türbänder) und im geschlossenen Zustand über eine metallische Dichtung wärmeleitend mit der Türzarge verbunden ist.
Bei der Verwendung freier Wärmeübertragungsflächen wird nutzbare Raumfläche um die für die Aufstellung und/oder Installation der Heiz- bzw. Kühlkörper notwendige Fläche reduziert. Damit der Strahlungsanteil zur Erhöhung der Behaglichkeit der Nutzer des beheizten Raumes wirken kann, dürfen die freien Wärmeübertragungsflächen nicht durch Möbel, Vorhänge etc. verschattet werden. Auf den freien Wärmeübertragungsflächen sammelt sich Staub, der beim Heizbetrieb durch freie Konvektion in die Raumluft emittiert und die Atemluft belastet. Freie Wärmeübertragungsflächen werden nach dem Stand der Technik üblicherweise an den Außenwänden, unter den Fensterbrüstungen aufgestellt.
Die Aufstellung freier Wärmeübertragungsflächen schränkt die architektonische Gestaltungsfreiheit (im Bereich der Fenster) ein. Die Aufstellung an den Außenwänden eines Gebäudes bedingt relativ lange (nämlich im wesentlichen zur Länge des Gebäudeumfangs proportionale) Rohrleitungen zur Verteilung des Wärmeträgermediums.
Beispiel: Für eine quadratische Geschoßfläche von 100 m² werden für die Horizontalverteilung des Wärmeträgerfluids bei einer ringförmigen etwa 60 m Rohrleitung (3 x 10 m, jeweils Vor- und Rücklauf) und bei einer sternförmigen Verteilung etwa 50 m Rohrleitung (5 x 5 m, jeweils Vor- und Rücklauf) benötigt.
Bei der Deckenheizung wird ein physiologisch unvorteilhaftes Temperaturprofil (direkt am Fußboden 18 °C, in Kopfhöhe etwa 24°C) über die Raumhöhe erreicht. Außerdem wird die architektonische Gestaltungsfreiheit im Bereich der Decke eingeschränkt.
Mit der Fußbodenheizung sollen gleichzeitig zwei Bedingungen erfüllt werden:
1. Es soll auf der frei begehbaren Bodenfläche eine angenehme Oberflächentemperatur von etwa 24 °C eingestellt werden und
2. es soll der Wärmeverlust des Raumes (teilweise) ausgeglichen werden.

Die Fußbodenheizung kann ihrer Aufgabe gerecht werden, wenn der Wärmebedarf kleiner oder gleich der Wärmeleistung der Fußbodenheizung ist. Mit den gestiegenen gesetzlichen Anforderungen an den Wärmeschutz von Gebäuden und den damit einhergehenden bautechnischen Verbesserungen bei der Wärmedämmung lassen sich bei der Wahl von Fußbodenheizungen kaum noch beide Anforderungen gleichzeitig erfüllen. Denn entweder stellt eine Fußbodenheizung die gewünschte (d. h. eine behagliche) Fußbodentemperatur zur Verfügung, dann wird in den meisten Fällen allerdings zuviel Wärme in den zu beheizenden Raum eingetragen, oder die Fußbodenheizung liefert (nur) die notwendige Wärme, dann wird aber entweder die gewünschte Oberflächentemperatur nicht mehr erreicht, oder es wird zuwenig Bodenfläche beheizt.
In jedem Fall aber verliert die Fußbodenheizung ihren eigentlichen Zweck, nämlich die Kombination der beiden Vorteile.
Wandheizungen haben den Nachteil, daß sich die frei nutzbare Wandflächen verringert. Genau wie bei einem aufgestellten Heizkörper kann man vor einer Wandheizung keine Möbel oder andere Gegenstände aufstellten, ohne die Wärmeübertragung an die Raumluft zu beeinträchtigen. Außerdem erfordert die Installation einer Wandheizung einen relativ hohen Aufwand.
Die Fußleistenheizung hat den gleichen Nachteil wie freie Wärmeübertragungsflächen und die Wandheizung: die frei nutzbare Wandfläche verringert sich. Vor einer Fußleistenheizung können keine Möbel oder andere Gegenstände aufgestellt, ohne die Wärmeübertragung zu beeinträchtigen.
Die bekannten elektrisch heizenden Türen haben folgende Nachteile:
- Sie verbrauchen hochwertige elektrische Energie, die überwiegend mit niedrigem Wirkungsgrad in Kraftwerken durch Verfeuerung fossiler Brennstoffe erzeugt wird und verursachen wegen der verglichen mit der direkten Wärmeerzeugung aus fossilen Brennstoffen oder auch der Nutzung von solarthermischer Energie teureren elektrischen Energie relativ hohe Betriebskosten.
- Sie haben eine Heizwirkung mit niedrigem Strahlungsanteil (bzw. hohem Konvektionsanteil und damit niedrigerem Komfort).
- Sie besitzen ein erhebliches Sicherheitsrisiko: Sie werden zu einer pötentiellen Brandquelle, wenn Sicherheitsfunktionen (Sicherheitstemperaturbegrenzer) ausfallen und daraufhin im Innenraum der Tür sehr hohe Temperaturen auftreten.
- Die Richtung der Heizungswirkung kann nicht gesteuert oder gewählt werden. Sie gibt Wärme über beide Seitenteile des Türblattes (Schließ- und Öffnungsseite) ab. Das schränkt die praktische Verwendbarkeit der Tür stark ein und macht eine gezielte, den heutigen Ansprüchen an Wohnkomfort entsprechenden Auslegung solcher Heizkörper unmöglich. Ein Beispiel aus dem Geschoßwohnungsbau macht dies deutlich: Bei einer Wohnung (Nutzfläche 100 m², 3 Zimmer, Küche, Bad) mit einem Wärmebedarf von 70 W/m² in der Räume von einem zentralem Flur (10 m²) über fünf Türen zugänglich sind, müssen die Türen insgesamt eine Wärmeleistung von mindestens 6,3 kW an die Räume (90 m²) übertragen. Annähernd die gleiche Leistung, wird dann aber auch in den Flur (10 m²) übertragen. Daraus ergibt sich ein überdimensioniertes Wärmeangebot von 630 W/m². Auch am Verhältnis der Flächen wird deutlich, daß damit der Flur überheizt wird. Eine elektrisch heizende Tür kann sinnvoll dort eingesetzt werden, wo auf beiden Seiten der Tür Räume mit gleichem Wärmebedarf liegen und die Räume gleichzeitig beheizt werden müssen.
- Sie kann nur zu Heiz- und nicht zu Kühlzwecken verwendet werden.
Die Türzargenheizung hat folgende Nachteile:
- Die Tür hat wegen der kleinen Wärmeaustauschfläche (Oberfläche des Türrahmens) nur eine relativ kleine Wärmeübertragungsleistung.
- Die Wärmestrahlung ist nicht in den zu temperierenden Raum gerichtet sondern auf den Raum im Türdurchgang.
- Die Wärme gelangt praktisch nur in den auf der Schließseite der Tür liegenden Raum, dieser Umstand schränkt die architektonische Gestaltungsfreiheit des Türbereiches ein. Die Öffnungsrichtung einer Tür kann entweder günstig für die Wärmeübertragung oder günstig für die Raumnutzung gestaltet werden.
- Die auf der Schließseite der Tür liegenden Wärmeübertragungsflächen der Türzargenheizung sind nicht thermisch getrennt von der auf der Öffnungsseite der Tür liegenden Wärmeübertragungsflächen. Zusammen mit der geringen Wärmeübertragungsleistung führt dies zu vergleichbaren Schwierigkeiten bei der praktischen Verwendung wie bei der elektrisch heizenden Tür.
- Sie hat ein träges Regelverhalten, das einem sparsamen Wärme- und Energiehaushalt in Gebäuden durch verstärkte passive Nutzung der Sonnenenergie nicht entgegenkommt.

Der Erfindung lag die Aufgabe zugrunde, mit einer Tür als Wärmeübertragungselement in einem Heizsystem Wärme in Räume einzutragen (Deckung des Wärmeverlustes) oder in Kühlsystemen Wärme aus dem zu temperierenden Raum abzuleiten (Deckung des Kältebedarfs), wobei jeweils die voranstehend genannten typischen Nachteile bekannter Systeme vermieden oder verringert werden sollen.
Die erfindungsgemäße Tür, bestehend aus Türblatt, Türzarge und Türbeschlägen, mit integrierten Flächen zur Übertragung von Wärme soll
- die Funktionen einer Tür und einer Wärmeübertragungsfläche in einem Bauelement praxistauglich zur Verfügung stellen.
- die gewünschte Wärmeübertragung ohne der Belegung von (teurer) Raumfläche bieten
- eine gezielte und steuerbare Wärmeübertragung ermöglichen, d. h. eine Übertragung von Wärme in notwendiger und hinreichender Größe
- die sparsame und ökologisch sinnvolle Verwendung von Energie unterstützen;
- ein kurzes Rohrleitungssystem für die Verteilung des Wärmeträgermediums ermöglichen;
- die Ästhetik des Wohnraums nicht beeinträchtigen
- die architektonische Freiheit bei der Gestaltung von Wand, Boden, Decken und Fenstern erhalten
- Freiheit bei der Raumnutzung (z. B. beim Aufstellen von Möbeln) bieten.
- die Hygiene der Raumluft verbessern
- ein physiologisch günstiges Temperaturprofil im Raum erzeugen
- die gewünschte Wärme bzw. Kälte sicher zur Verfügung stellen.

Die Aufgabe wird entsprechend den Merkmalen des Patentanspruchs 1 gelöst.
Die Unteransprüche geben zweckmäßige Ausgestaltungen der Merkmale des Anspruchs 1 wieder.
Gemäß der Erfindung wird eine genormte oder nicht genormte Tür mit mindestens einer Wärmeübertragungsfläche verbunden oder eine Wärmeübertragungsfläche mit allen Elementen und Funktionen einer Tür versehen, so daß in jedem Fall, die wesentlichen Elemente, Funktionen und Merkmale einer Tür und einer im Türkörper integrierten Wärmeübertragungsfläche vereint sind. Die im Türkörper integrierten Wärmeübertragungsflächen können sowohl auf beiden Seiten der Tür (Schließ- und Öffnungsfläche) angeordnet sein (zweiseitig wirksame Wärmeübertragungsfläche) als auch nur auf einer Seite (einseitig wirksame Wärmeübertragungsfläche). Die beiden Türseitenteile sind innerhalb des Türkörpers thermisch (gegeneinander wärmeisoliert) und hydraulisch getrennt, so daß die Wärmeübertragung gemeinsam (z. B. über ein Thermostatventil) oder getrennt (z. B. über zwei Thermostatventile) gesteuert werden. Die erfindungsgemäße Tür wird von einem Wärmeträgerfluid durchströmt, das als Energieträger dient. Wird die Tür als Heizkörper eingesetzt, kann sie mit Warmwasser betrieben werden. Wird sie als Kühlkörper eingesetzt, kann sie mit Kaltwasser betrieben werden.
Die erfindungsgemäße Tür kann wahlweise ausgestattet sein mit
- einer Einrichtung zum Entlüften;
- einer Einrichtung zum Entleeren;
- verschiedenen dekorativen oder funktionalen Oberflächen bzw. Beschichtungen verschiedener Art (z. B. Holzfurnier, andere dünnwandige Holzwerkstoffe, Lackierung, Galvanisierung, Kunststoffbeschichtung, sonstige Anstriche usw.)
- zusätzlichen bekannten Elementen von Türen wie z. B. Lichtausschnitte, Lüftungsöffnungen, Guckloch, Briefschlitz usw.
- zusätzlichen bekannten Elementen von Heiz- und Kühlkörpern wie z. B. Thermometer, Thermostatventile, Wärmezähler für die Heizkostenabrechnung, usw.
- einer hydraulischen Verbindung zum Wärmeträgerverteilungsystem
- einer Einrichtung zum Trennen und Abschließen der hydraulischen Verbindung zum Wärmeträgerverteilungsystem
- einer mechanischen Verbindungen zur Wand bzw. Zarge zur Aufnahme der Last der Tür bzw. des erfindungsgemäßen Heizkörpers (Band, Scharnier o. ä.)
- mechanischen Verbindungen zur Wand bzw. Zarge und Elemente zum Schließen/Öffnen und Abschließen der Tür (Schloß, Türfalle, Drücker usw.)
Die erfindungsgemäße Lösung bezieht sich auf Türen aller Art wie Schwenktüren, Möbeltüren, Türen in Einbauschranksystem, Schiebetür, Drehtüren, Falttüren, Ein- und Doppelflügelige Türen, Garagentore sowie auch auf die Türzarge.
Bei der erfindungsgemäßen Tür ist das Verhältnis der Wärmekapazität zur Wärmeübertragungsfläche im Vergleich zu bekannten freien Wärmeübertragungsflächen (z. B. Rohrradiator, Plattenheizkörper) klein, damit die Wärmeübertragung einer raschen Regelung folgen und die in den zu temperierenden Raum einwirkende solare Energie passiv nutzen kann.
Die erfindungsgemäße Tür mit integrierten Flächen zur Übertragung von Wärme kann aus Kunststoffvollmaterial bestehen, in der Art, daß die das Wärmeträgerfluid führenden Kanäle oder Rohre und das Türfüllmaterial in einem Stück herstellt (z. B. gepreßt) sind.
Die erfindungsgemäße Tür mit integrierten Flächen zur Übertragung von Wärme kann mit Leitungen und Anschlüssen für die Übertragung elektrischen Kraftstroms (z. B. für den Antrieb von Aktoren im Türblatt) und elektrischer Signale (z. B. für die Ansteuerung von Sensoren) sowie für die Übertragung hydraulischer und pneumatischer Kräfte und Signale.
Die erfindungsgemäße Tür mit integrierten Flächen zur Übertragung von Wärme kann auch zusätzlich mit speziellen Funktionen einer Tür ausgestattet werden, z. B. Brand-, Rauch- und Schallschutztür. Insbesondere kann der erfindungsgemäße Heizkörper vorteilhaft als Brandschutztür in der speziellen Weise verwendet werden; daß im Brandfall, die Tür automatisch von innen mit Wasser (aus dem Heizungssystem) geflutet wird.
Ein Ausführungsbeispiel der Erfindung ist in den Figuren 1 bis 5 der Zeichnungen dargestellt und wird im folgenden näher beschrieben. Es zeigen:
- Fig. 1:: Gesamtansicht einer schematisch dargestellten Tür mit integrierten Einrichtungen zur Wärmeübertragung mit thermischer Trennung von Öffnungs- und Schließseite.
- Fig. 2:: Schematisierte Darstellung der Tür im horizontalen Schnitt.
- Fig. 3:: Schematisierte Darstellung der Ansicht einer nicht genormten multifunktionalen Verbindung von Türblatt und Zarge bei 90° Türöffnung mit ausschnittsweise vertikalem Teilschnitt.
- Fig. 4:: Schematisierte Darstellung einer nicht genormten multifunktionalen Verbindung von Türblatt und Zarge im horizontalen Schnitt mit Draufsicht.
- Fig. 5:: Masken für die Schalthüse der multifunktionalen Verbindung von Türblatt und Zarge.

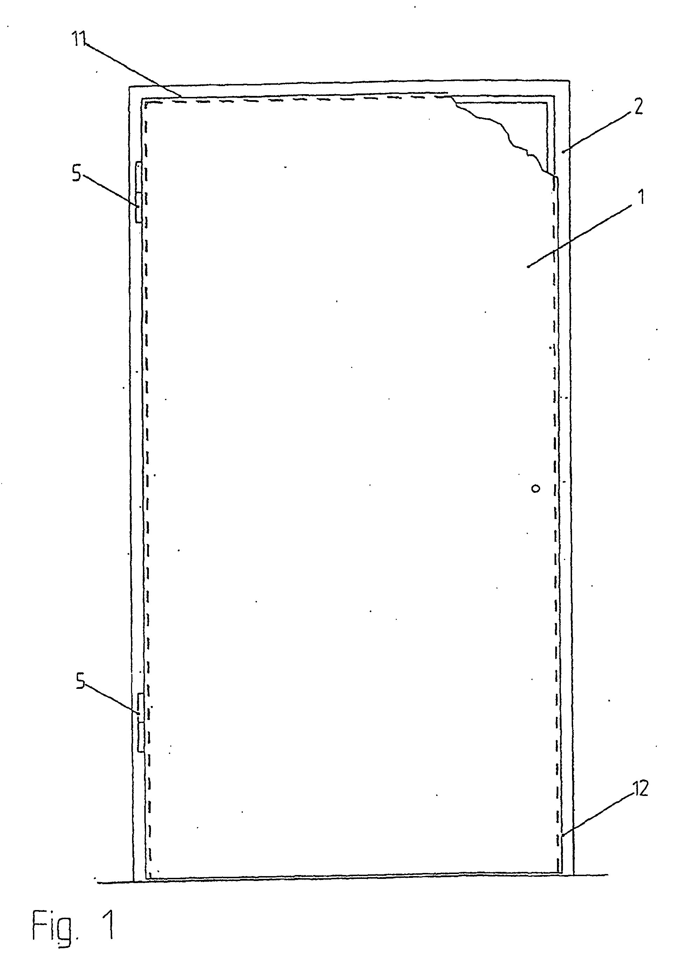

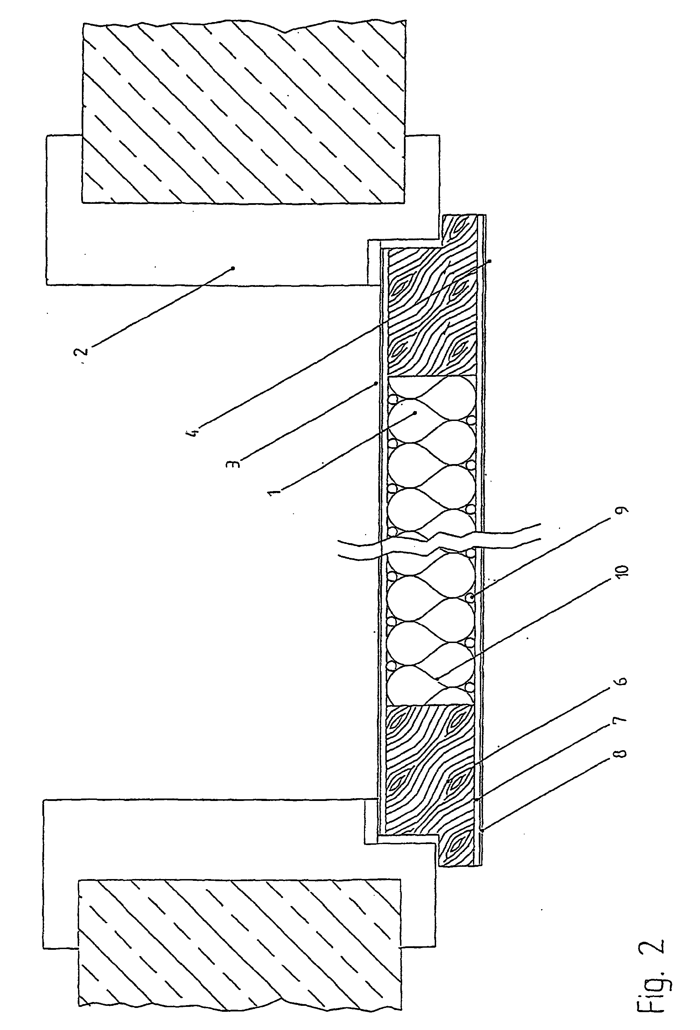

Fig. 1 zeigt eine Flügeltür bestehend aus Türblatt 1 und Türzarge 2. Türblatt 1 und Türzarge 2 werden, wie Fig. 2 zeigt, in Schließseite 3 und Öffnungsseite 4 unterschieden. Türblatt 1 und Zarge 2 sind mechanisch über zwei nicht genormte multifunktionale Verbindungen 5 miteinander verbunden. Das Türblatt 1 besteht, wie Fig. 2 zeigt, aus einem lastabtragenden Rahmen 6, der auf der Schließseite 3 und der Öffnungsseite 4 mit wärmeleitfähigen Deckplatten 7 aus Aluminium versehen ist. Die Deckplatten 7 und die Türkanten sind zu dekorativen Zwecken mit einer Decklage 8 versehen. Im Innenraum des Türblattes befinden sich anstelle von Einlagen auf beiden Seiten Wärmeübertragerelemente 9, bestehend aus vertikal verlaufenden und parallel zueinander angeordneten Kupferrohren, die an den Enden in Sammelrohren münden, die thermisch gekoppelt jeweils an eine Deckplatte angrenzen aber voneinander durch eine Isolierschicht 10 aus Polyurethanschaum getrennt sind. Die beiden Wärmeübertragerelemente 9 sind hydraulisch ebenfalls voneinander getrennt benutzbar. Die beiden Wärmeübertragerelemente 9 sind über die multifunktionale Verbindung 5 mit dem Wärmeträgerverteilsystem verbunden. Im oberen Teil des Türrahmens durchdringen im Türkantenbereich Vorrichtungen zur Entlüftung 11 der Wärmeübertrager den Türrahmen. Im unteren Teil der Tür sind im Falzbereich zwei Entleerungsvorrichtungen 12 zur Entleerung der Wärmeübertrager in den Türrahmen integriert.

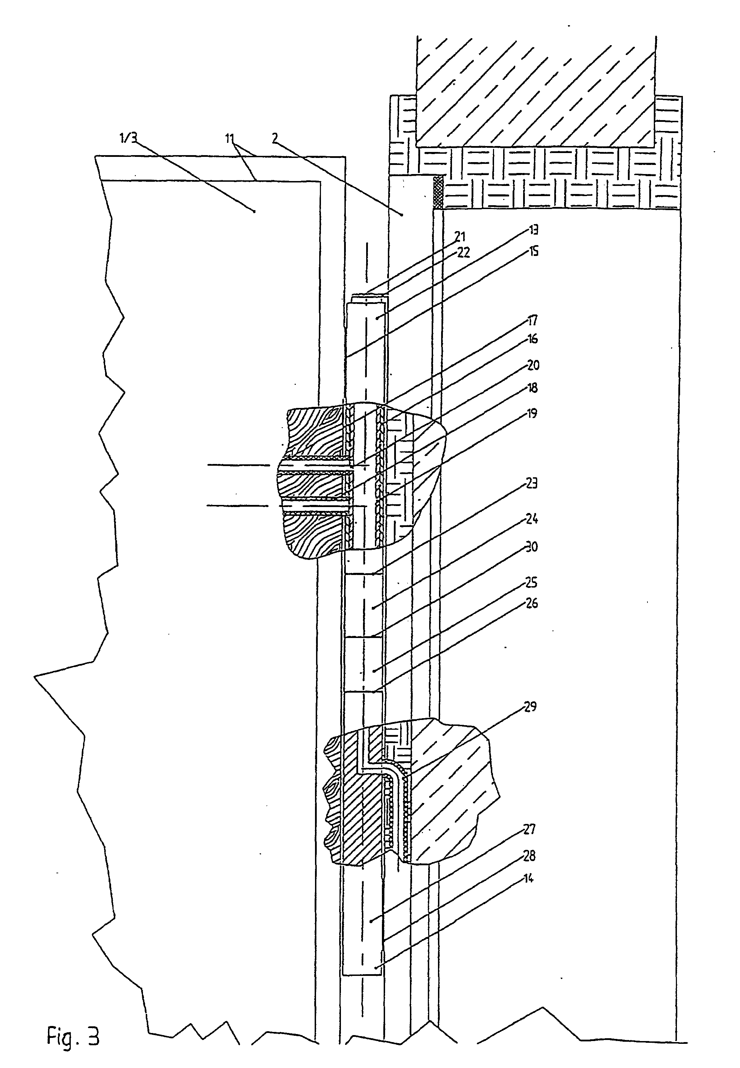

Fig. 3 zeigt wie Türblatt 1 und Zarge 2 über zwei multifunktionale Verbindungen 5 miteinander verbunden sind, wovon die eine Verbindung als Vorlauf und die andere als Rücklauf an das Wärmeträgerverteilnetz angeschlossen ist. Die multifunktionale Verbindung 5 besteht aus einem Oberteil 13, das an dem Türblatt 1 befestigt ist und dem Unterteil 14, das an der Zarge befestigt ist. Die Befestigung geschieht mittels des oberen Lappens 15.

Das Oberteil 13 besteht aus der Verteilerhülse 16, in die zwei Verbindungsrohre 17;18 münden, die mit den Wärmeübertragerelementen 9 der Öffnungs- 3 und Schließseite 4 verbunden sind. In das Oberteil 13 eingepaßt, ist eine losgelagerte hydraulische Schalthülse 19. Die Schalthülse 19 weist Bohrungen 20 und tangential angeordnete Langlöcher auf. Durch diese Öffnungen wird das durch die multifunktionale Verbindung 5 strömende Wärmeträgerfluid wahlweise nicht oder alternativ oder gleichzeitig über die Verteilerhülse 16 mit den Wärmeübertragem 9 der Öffnungs- 3 und Schließseite 4 verbunden. Die Schalthülse 19 ist im oberen Teil verschlossen und wird in ihrem Durchmesser verjüngt, durch eine Stopfbuchse abgedichtet, nach oben aus der Verteilerhülse 16 herausgeführt.

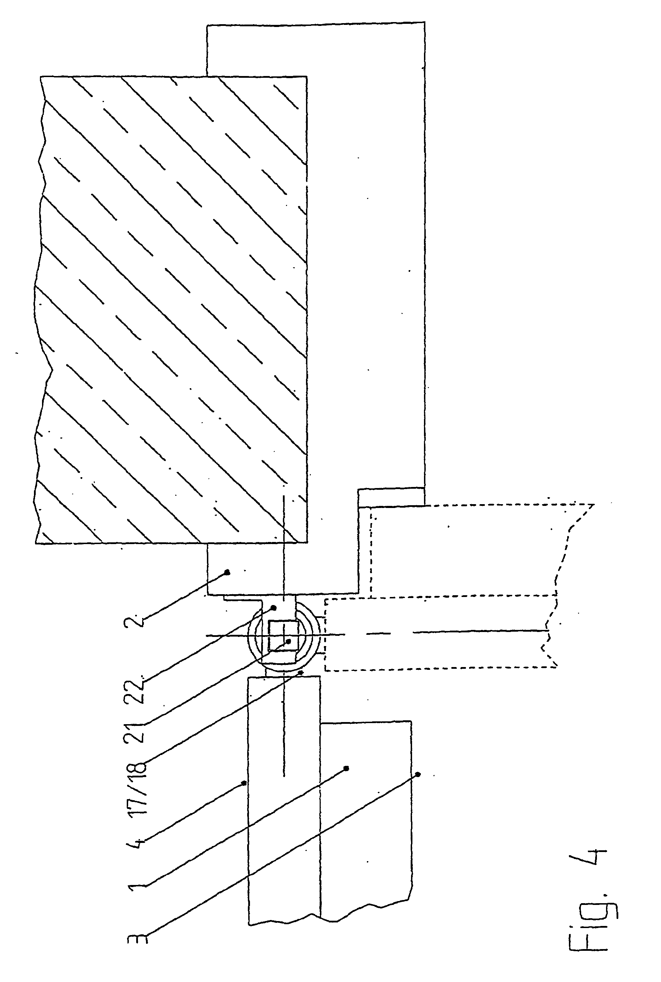

Fig. 4 zeigt dargestellt bei 90° geöffnetem Türblatt 1, daß die Schalthülse 19 nach oben abschließend als Außenvierkant 21 ausgebildet ist. Der Außenvierkant 21 wird durch eine an der Türzarge 2 befestigte Arretierungsgabel 22 in einer von mehreren möglichen Positionen gehalten. Die Stopfbuchse schließt das Oberteil 13 dichtend nach oben ab.
Die Verteilerhülse 16 ist mittels Schraubverbindung 23 an einen handelsüblichen axial und radial belastbaren flüssigkeitsdurchstömbaren Schnellkupplungsnippel 24 mit Ventil angeschlossen. Dieser Schnellkupplungsnippel 24 ist lösbar mit einer flüssigkeitsdurchstömbaren Schnellkupplungsbuchse 25 verbunden. Oberteil 13 und Unterteil 14 der multifunktionalen Verbindung 5 sind durch eine solche Schnellkupplung 24;25 hydraulisch verbunden. Die Schnellkupplungsbuchse 25 ist mittels Schraubverbindung 26 an der nach unten abgeschlossenen Sammelhülse 27 befestigt. Die nach unten abgeschlossenen Sammelhülse 27 bildet mit dem unteren Befestigungslappen 28 das Unterteil 14 der multifunktionale Verbindung 5 von Türblatt 1 und Zarge 2. In die Sammelhülse 27 mündet das Verbindungsrohr 28 zum Wärmeträgerverteilungsnetz.
Die multifunktionale Verbindung 5 von Türblatt 1 und Zarge 2, erfüllt somit folgende Aufgaben:
- Übertragung der Kräfte über Türbandlappen 15; 28, Verteiler-16 und Sammelhülse 27 sowie die axial und radial belastbare Schnellkupplung 24; 25 mit integriertem Axiallager 30, das die mechanische Last aufnimmt und die Drehbeweglichkeit des Türblattes 1 ermöglicht.
- Herstellung einer leicht trennbaren hydraulischen Verbindung zwischen Wärmeübertragern 9, Deckplatten 7 und Wärmeträgerverteilungsystem, die bei Bedarf (z. B. Aushängen des Türblattes 1) ein Trennen und Abschließen der hydraulischen Verbindung zum Wärmeträgerverteilungsystem ermöglicht, ohne daß dabei Wärmeträgerfluid austritt.
Die Durchströmung der einzelnen Wärmeübertrager 9 auf Schließseite 3 und Öffnungsseite 4 mit Wärmeträgerfluid wird in Abhängigkeit vom Öffnungswinkel des Türblattes 1 je nach Stellung der Schalthülse 19 gesteuert. Die Anordnung und Ausdehnung der .Öffnungen in der Schalthülse 19 bestimmen, welche Seite der Tür (Schließseite 3, Öffnungsseite 4, beide oder keine von beiden) vom Wärmeträgerfluid durchströmt wird.

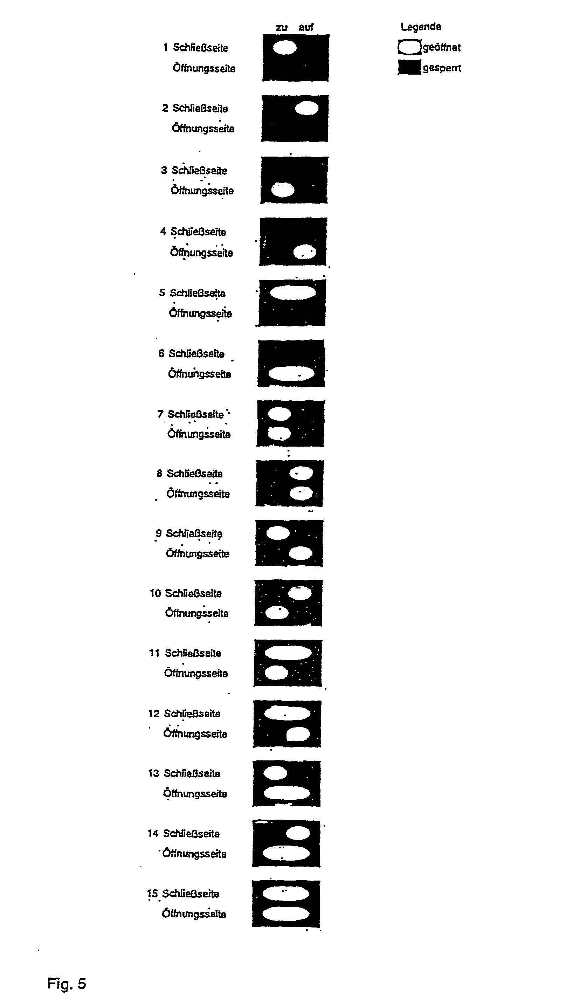

Fig. 5 zeigt die Schaltungsmöglichkeiten in Abhängigkeit von der Anordnung der Bohrungen in der Schalthülse 19 dargestellt als Zylinderabwicklungen der Schalthülse für 90° Türöffnungswinkel. Die Wirkung auf Bereiche größerer Öffnungswinkel auszudehnen wird durch Ausformung der "Tür auf"- Öffnungen als Langlöcher bewirkt.

Durch Einsatz der erfindungsgemäßen Tür mit integrierten Flächen zur Übertragung von Wärme werden folgende Vorteile erzielt:
- die Funktionen einer Tür und einer Wärmeübertragungsfläche werden in einem Bauelement praxistauglich zur Verfügung gestellt;
- die gewünschte Wärmeübertragung wird ohne zusätzliche Belegung von Raumfläche ermöglicht;
dadurch läßt sich Gebäudefläche wirtschaftlicher nutzen;
Beispiel: Bei einem Raum von 20 m² Grundfläche belegt ein unter dem Fenster installierter Heizkörper (Tiefe 10 cm, Länge 1 m) eine Grundrißfläche von etwa 0,1 m². Bezogen auf eine Geschoßfläche von 100 m² und einen Mietpreis von 10 bis 20 DM pro m² und Monat ergibt sich eine Einsparung in Höhe von 60-120 DM pro Jahr;
- Wärme kann in notwendigem und hinreichendem Umfang, gezielt und steuerbar übertragen werden;
- im Zusammenhang mit den Anforderungen der umweltverträglichen Nutzung von Gebäuden kann Energie sparsam (durch passive Solarenergienutzung) und effizient (wegen des raschen Regelverhaltens) verwendet werden;
- in Geschoßflächen mit einen zentralen Zugangsbereich mit daran angrenzenden Räumen, die z. B. für Nutzungen als Wohn- und Büroflächen typisch sind, können die Wärmeübertragungsflächen über ein kurzes Rohrleitungssystem für die Verteilung des Wärmeträgermediums angeschlossen werden;
   Beispiel: Die Länge des Rohrleitungssystems steht im Verhältnis zur Umfangslänge des zentralen Zugangsbereich des Gebäudes (Flur). Für eine quadratische Geschoßfläche von 100 m² mit einem zentralen Flurbereich mit einer Fläche von 2 m x 5 m werden für die Horizontalverteilung des Wärmeträgerfluids bei einer ringförmigen Verlegung etwa 24 m Rohrleitung (2 m + 5 m + 5 m, jeweils Vor- und Rücklauf) und bei einer sternförmigen Verteilung etwa 25 m Rohrleitung (5 × 2,5, jeweils Vor- und Rücklauf) benötigt. Gegenüber der oben beschriebenen Wärmeverteilung am Rand der Geschoßfläche ergibt sich in diesem Fall eine Einsparung an Rohrleitungslänge in Höhe von 50 bis 60 %. Neben dem Vorteil der Verringerung des Aufwandes bei der Errichtung ergibt ein weiterer Vorteil beim Betrieb eines kurzen Rohrleitungsnetzes. Der Strömungswiderstand eines kurzen Rohrleitungsnetzes ist geringer als der eines langen. Entsprechend reduziert sich der Energieaufwand für die Umwälzung des Wärmeträgerfluids;
- die Ästhetik des zu temperierenden Raums wird erhöht;
- die architektonische Freiheit bei der Gestaltung von Wand, Boden, Decken und Fenstern bleibt erhalten;
- die Freiheit bei der Raumnutzung (z. B. beim Aufstellen von Möbeln) bleibt erhalten;
- die Hygiene der Raumluft wird verbessert;
- der Aufwand für die Reinigung freier Wärmeübertragungsflächen entfällt bzw. ist mit der Reinigung der Tür erledigt;
- Wärmeübertragung mit hohem Strahlungsanteil;
- im zu temperierenden Raum wird ein physiologisch günstiges Temperaturprofil erzeugt;
- die gewünschte Wärme wird sicher übertragen;
- die zustandsabhängige Wirkungsrichtung der Wärmeübertragung (z.B. ein- oder zweiseitig wirksam, getrennt oder gemeinsam regelbar, Aus- Umschalten der Heizwirkung wenn die Tür geöffnet ist) kann gewählt und gesteuert werden;
- Reduzierung des Einsatzes von Material für die Wärmeaustauscherfläche und die damit erzielbaren wirtschaftlichen und ökologischen Vorteile (Ressourcenschonung)

## Patentansprüche

1. Tür mit integrierten Flächen zur Übertragung von Wärme, bestehend aus einem Türblatt (1) mit Beschlägen und einer Türzarge (2)
**dadurch gekennzeichnet,**
**daß** eine der oder beide Türblattseiten (3,4) und/oder die Türzarge (2) mit integrierten Wärmeübertragungsflächen ausgestattet sind,
**daß** die integrierten Wärmeübertragungsflächen von einem Wärmeträgerfluid (z. B. Warmwasser oder Kaltwasser) durchströmt werden,
**daß** die beiden Türblattseiten (3,4) bzw. die darin integrierten Wärmeübertragungsflächen im Inneren des Türblatts (1) und/oder die Zargenflächen auf der Schließseite (3) und die Zargenflächen auf der Öffnungsseite (4) der Tür thermisch und hydraulisch getrennt sind und
**daß** das Wärmeträgerfluid beliebig und unabhängig voneinander auf eine oder beide Seiten des Türblattes (1) und/oder der Zarge (2) leitbar ist.

2. Tür nach Anspruch 1,
**dadurch gekennzeichnet,**
**daß** sie eine mechanische Verbindung zwischen Wand bzw. Zarge (2) und Türblatt (1) zur schwenkbaren Befestigung, z.B. Band, Scharnier, aufweist

3. Tür nach Anspruch 1,
**dadurch gekennzeichnet,**
**daß** ein Element zur seitlichen Bewegung des Türblattes, z.B. Band, Rollen-Schienen-Linearführung, vorgesehen ist.

4. Tür nach einem der Ansprüche 1 bis 3,
**dadurch gekennzeichnet,**
**daß** das Türblatt (1) einen hydraulischen Anschluß zum Wärmeträgerverteilungssystem besitzt.

5. Tür nach Anspruch 4,
**dadurch gekennzeichnet,**
**daß** ein Element zum Trennen und Abschließen der hydraulische Verbindung vom Türblatt (1) zum Wärmeträgerverteilungssystem vorgesehen ist.

6. Tür nach Anspruch 5,
**dadurch gekennzeichnet**
**daß** eine Vorrichtung vorgesehen ist, die in Abhängigkeit vom Öffnungszustand der Tür steuert, welche Seite(n) des Türblattes (1) vom Wärmeträgerfluid durchströmt werden.

7. Tür nach den Ansprüchen 2 und 4,
**dadurch gekennzeichnet,**
**daß** das Türblatt (1) eine Verbindung zur Wand bzw. Zarge hat, die die mechanische Last aufnimmt, die Bewegung der Tür ermöglicht und die gleichzeitig die hydraulische Verbindung zum Wärmeträgerverteilungssystem herstellt.

8. Tür nach Anspruch 7,
**dadurch gekennzeichnet**
**daß** das Türblatt (1) und die Zarge (2) über zwei multifunktionale Verbindungen (5), miteinander verbunden sind, die die mechanische Last des Türblatts (1) aufnehmen und von denen die eine Verbindung als Vorlauf und die andere Verbindung als Rücklauf für das Wärmeträgerfluid vom bzw. zum Wärmeverteilernetz ausgebildet ist.

9. Tür nach Anspruch 8,
**dadurch gekennzeichnet,**
**daß** eine multifunktionale Verbindung (5) aus einem Oberteil (13), das am Türblattes (1) befestigt ist und einem Unterteil (14), das an der Zarge (2) befestigt ist, besteht, daß das Oberteil (13) aus einer Verteilerhülse (16) besteht, in die zwei Verbindungsrohre (17,18) münden, die mit Wärmeübertragerelementen (9) der Öffnungs- (3) und der (Schließseite, (4) verbunden sind, daß in das Oberteil (13) eine losgelagerte hydraulische Schalthülse (19) eingepaßt ist, die Bohrungen (20) und tangential angeordnete Langlöcher aufweist, wobei durch diese Öffnungen das durch die multifunktionale Verbindung strömende Wärmeträgerfluid wahlweise nicht oder alternativ oder gleichzeitig über die Verteilerhülse (16) mit den Wärmeübertragerelementen (9)der Öffnungs- (3) bzw. Schließseite (4) verbunden ist.

10. Tür nach den Ansprüchen 4 und 6,
**dadurch gekennzeichnet,**
**daß** das Türblatt (1) eine hydraulische Verbindung zum Wärmeträgerverteilungssystem hat, die gleichzeitig als Vorrichtung ausgestaltet ist, die in Abhängigkeit vom Öffnungszustand der Tür steuert, welche Seite(n) des Türblattes (1) vom Wärmeträgerfluid durchströmt werden.

11. Tür nach Anspruch 6 und 7,
**dadurch gekennzeichnet,**
**daß** das Türblatt (1) eine Verbindung zur Wand bzw. Zarge (2) hat, die die mechanische Last aufnimmt und die gleichzeitig die hydraulische Verbindung zum Wärmeträgerverteilungsystem herstellt sowie die gleichzeitig als Vorrichtung ausgestaltet ist, die in Abhängigkeit vom Öffnungszustand der Tür steuert, welche Seite(n) der Tür vom Wärmeträgerfluid durchströmt werden.

12. Tür nach einem der voranstehenden Ansprüche,
**dadurch gekennzeichnet,**
**daß** ein oder mehrere Temperaturregelorgane für die Regelung der Strömung des Wärmeüberträgerfuids in den in den Tür- und Zargenflächen auf der Öffnungs- (3) bzw. Schließseite (4) integrierten Wärmeübertragungsflächen vorgesehen sind.

13. Tür nach einem der voranstehenden Ansprüche,
**dadurch gekennzeichnet,**
**daß** sie als Möbeltür ausgebildet ist.

14. Tür nach einem der voranstehenden Ansprüche,
**dadurch gekennzeichnet,**
**daß** sie mit mindestens einer Einrichtung zum Entlüften ausgerüstet ist.

15. Tür nach einem der voranstehenden Ansprüche,
**dadurch gekennzeichnet,**
**daß** sie mit mindestens einer Einrichtung zum Entleeren ausgerüstet ist.

16. Tür nach einem der voranstehenden Ansprüche,
**dadurch gekennzeichnet,**
**daß** sie mit Elementen von Heiz- und Kühlkörpern, wie z. B. Thermometer, Thermostatventile, Wärmezähler für die Heizkostenabrechnung, ausgestattet ist.

17. Tür nach einem der voranstehenden Ansprüche,
**dadurch gekennzeichnet,**
**daß** sie mit Funktionselementen von Türen, wie z. B. Lichtausschnitte, Lüftungsöffnungen, Guckloch, Briefschlitz, Sicherheitsbeschläge, ausgerüstet ist.

18. Tür nach einem der voranstehenden Ansprüche,
**dadurch gekennzeichnet,**
**daß** sie mit einer funktionalen oder dekorativen Oberfläche oder Beschichtung, wie z. B. Holzfurnier, andere dünnwandige Holzwerkstoffe, metallische Werkstoffe, Lackierung, Galvanisierung, Kunststoffbeschichtung, sonstige Anstriche, versehen ist.

19. Tür nach einem der voranstehenden Ansprüche,
**dadurch gekennzeichnet,**
**daß** sie als einflügelige Tür, mehrflügelige Tür, Horizontal- oder Vertikalschwenktür, Schiebetür, Drehtür, Falttür, Garagentor, ausgebildet ist.

20. Tür nach einem der voranstehenden Ansprüche,
**dadurch gekennzeichnet,**
**daß** in die thermische Trennung eine Sprinklereinrichtung integriert ist, die es erlaubt, abhängig von einem Brandmeldesignal die Tür von innen mit Wärmeträgerfluid zu fluten.

21. Tür nach einem der voranstehenden Ansprüche,
**dadurch gekennzeichnet,**
**daß** sie mit elektrischen Kraft- und Signalleitungen ausgestattet ist.

22. Tür nach einem der voranstehenden Ansprüche,
**dadurch gekennzeichnet,**
**daß** sie mit Leitungen und Anschlüssen für die Übertragung elektrischen Kraftstroms, z. B. für den Antrieb von Aktoren im Türblatt, und elektrischer Signale, z. B. für die Ansteuerung von Sensoren, sowie für die Übertragung hydraulischer und pneumatischer Kräfte und Signale ausgestattet ist.

23. Tür nach einem der voranstehenden Ansprüche,
**dadurch gekennzeichnet,**
**daß** das Türblatt aus Kunststoffvollmaterial besteht und daß die das wärmeabgebende Heizmedium führenden Kanäle oder Rohre und das Türfüllmaterial in einem oder mehreren Stücken hergestellt sind.

24. Tür nach Anspruch 23,
**dadurch gekennzeichnet,**
**daß** das Türblatt durch Pressen des Kunststoffvollmaterials hergestellt ist.

## Claims

1. A door with integrated areas for the transfer of heat, comprising a door leaf (1) including mountings and a door frame (2),
**characterised in that**
one or both sides of the door leaves (3,4) and/or the door frame (2) are provided with integrated heat transfer areas,
**in that** a heat transfer fluid (e.g. warm or cold water) flows through said integrated heat transfer areas,
**in that** the two sides of the door leaves (3,4), the heat transfer areas respectively, integrated inside the door leaf (1) and/or the frame on the latching side (3) and the frame on the opening side (4) of the door are thermally and hydraulically separated and
**in that** the heat transfer fluid, independently from one another, can be optionally led onto one or both sides of the door leaf (1) and/or the door frame (2).

2. A door according to claim 1,
**characterised in that**
it comprises a mechanical connection between wall respectively door frame (2) and door leaf (1) for the hinged mounting, e.g. hinge plate, hinge.

3. A door according to claim 1,
**characterised in that**
an element is provided for the lateral movement of the door leaf, e.g. hinge plate, linear roll-rail guidance.

4. A door according to any one of claims 1 to 3,
**characterised in that**
the door leaf (1) comprises a hydraulic connection to the distribution system of the heat transfer medium.

5. A door according to claim 4,
**characterised in that**
an element is provided for disconnecting and shutting off the hydraulic connection between the door leaf (1) and the distribution system of the heat transfer medium.

6. A door according to claim 5,
**characterised in that**
a device is provided which, dependent on the state of opening of the door, controls through which side(s) of the door leaf (1) the heat transfer medium is to flow.

7. A door according to claim 2 and 4,
**characterised in that**
the door leaf (1) disposes of a connection to the wall and the door frame (2) respectively, which takes up the mechanical load, allows the door to move and simultaneously provides the hydraulic connection to the distribution system of the heat transfer medium.

8. A door according to claim 7,
**characterised in that**
the door leaf (1) and the door frame (2) are connected with one another by means of two multiple-function connections (5) for taking up the mechanical load of the door leaf (1), one connection of which is designed as forward flow and the other connection is designed as reverse flow for the heat transfer medium from or to the heat distribution network.

9. A door according to claim 8,
**characterised in that**
a multiple-function connection (5) consists of an upper part (13) which is mounted at the door leaf (1) and a lower part (14) which is mounted at the door frame (2),
**in that** the upper part (13) consists of a distribution sleeve (16) with two connecting tubes (17,18) leading into said sleeve, said tubes being connected to heat transfer elements (9) of the opening side (3) and latching side (4),
**in that** a loose-bearing hydraulic control sleeve (19) is adapted in the upper part (13), said sleeve having bore holes (20) and tangentially arranged elongated slots, wherein the heat transfer fluid flowing through said openings through the multiple-function connection is optionally not connected or alternatively or simultaneously connected with the heat transfer elements (9) of the opening side (3) or latching side (4) by means of the distribution sleeve (16).

10. A door according to claim 4 and 6,
**characterised in that**
the door leaf (1) has a hydraulic connection to the distribution system of the heat transfer medium, said connection being concurrently designed as to control, depending on the opening state of the door, through which side(s) of the door leaf (1) the heat transfer medium is to flow.

11. A door according to claim 6 and 7,
**characterised in that**
the door leaf (1) has a connection to the wall and the door frame (2) respectively for taking up the mechanical load and simultaneously providing the hydraulic connection to the distribution system of the heat transfer medium, said connection being also designed to control, in relation to the state of opening of the door, through which side(s) of the door leaf (1) the heat transfer medium is to flow.

12. A door according to any one of the foregoing claims,
**characterised in that**
one or several heat control elements are provided for regulating the flow of the heat transfer fluid in the heat transfer areas integrated in the opening or latching side (4) of the door and door frame faces.

13. A door according to any one of the foregoing claims,
**characterised in that**
it is designed as furniture door.

14. A door according to any one of the foregoing claims,
**characterised in that**
it is equipped with at least one venting arrangement.

15. A door according to any one of the foregoing claims,
**characterised in that**
it is equipped with at least one discharge arrangement.

16. A door according to any one of the foregoing claims,
**characterised in that**
it is fitted with heating and cooling elements, for example thermometers, heat valves, heat counters required for the calculation of heating costs.

17. A door according to any one of the foregoing claims,
**characterised in that**
it is equipped with door function elements such as window cut-outs, vents, peepholes, letter box slots, security fittings.

18. A door according to any one of the foregoing claims,
**characterised in that**
it is provided with a functional or decorative surface or finish, such as veneer wood, other thin-walled wood, metallic material, lacquer coating, electroplating finish, plastic coating, other coatings.

19. A door according to any one of the foregoing claims,
**characterised in that**
it is designed as one-wing door, multiple-wing door, horizontal or vertical swinging door, sliding door, revolving door, folding door, garage door.

20. A door according to any one of the foregoing claims,
**characterised in that**
a sprinkler is integrated in the thermal separation device allowing, depending on a fire alarm signal, the flooding of the door with the heat transfer medium from the inside.

21. A door according to any one of the foregoing claims,
**characterised in that**
it is equipped with electrical power and signal lines.

22. A door according to any one of the foregoing claims,
**characterised in that**
it is equipped with lines and connections for the transmission of electric power, e.g. for the activation of actuators in the door leaf and electrical signals, e.g. for the selection of sensors, as well as for the transmission of hydraulic and pneumatic forces and signals.

23. A door according to any one of the foregoing claims,
**characterised in that**
the door leaf is made from solid plastic material and **in that** the conduits or tubes carrying the heat emitting heating medium and the door panel are manufactured in one or several pieces.

24. A door according claim 23,
**characterised in that**
the door leaf is fabricated by compression of the plastic material.

## Revendications

1. Porte avec des surfaces thermoconductrices intégrées, se composant d'un vantail de porte (1) avec ferrures et d'un encadrement de porte (2),
**caractérisée**
**en ce que** l'un ou les deux côtés du vantail de porte (3, 4) et/ou l'encadrement de porte (2) sont équipés de surfaces thermoconductrices intégrées,
**en ce qu'**un fluide caloporteur (par ex. de l'eau chaude ou de l'eau froide) coule à travers les surfaces thermoconductrices intégrées,
**en ce que** les deux côtés du vantail de porte (3, 4) et les surfaces thermoconductrices intégrées à l'intérieur du vantail de porte (1) et/ou les surfaces de l'encadrement de porte du côté de la serrure (3) et les surfaces de l'encadrement de porte du côté de l'ouverture (4) de la porte sont séparées de manière thermique et hydraulique et
**en ce que** le fluide caloporteur peut être conduit au choix et indépendamment l'un de l'autre sur l'un ou sur les deux côtés du vantail de porte (1) et/ou de l'encadrement de porte (2).

2. Porte selon la revendication 1
**caractérisée**
**en ce qu'**elle présente entre le mur et/ou l'encadrement de porte (2) et le vantail de porte une jonction mécanique pour fixation pivotante autour d'un axe, telle que paumelle, charnière.

3. Porte selon la revendication 1
**caractérisée**
**en ce qu'**il est prévu un élément de fixation latérale du vantail de porte tel qu'une paumelle, une glissière linéaire à galets et rails.

4. Porte selon l'une des revendications 1 à 3
**caractérisée**
**en ce que** le vantail de porte (1) possède un raccord hydraulique au système de distribution du fluide caloporteur.

5. Porte selon la revendication 4
**caractérisée**
**en ce qu'**un élément est prévu pour séparer et fermer la jonction hydraulique du vantail de porte (1) au système de distribution du fluide caloporteur.

6. Porte selon la revendication 5
**caractérisée**
**en ce qu'**il est prévu un dispositif contrôlant, en fonction de l'état d'ouverture de la porte, à travers quel(s) côté(s) du vantail de porte (1) le fluide caloporteur coule.

7. Porte selon les revendications 2 et 4
**caractérisée**
**en ce que** le vantail de porte (1) dispose d'une jonction avec le mur et/ou l'encadrement de porte qui supporte la charge mécanique, permet le mouvement de la porte et établit en même temps le raccord hydraulique avec le système de distribution du fluide caloporteur.

8. Porte selon la revendication 7
**caractérisée**
**en ce que** le vantail de porte (1) et l'encadrement de porte (2) sont reliés entre eux par deux raccords multifonctions (5) qui supportent les charges mécaniques du vantail de porte (1), l'un de ces raccords étant formé comme arrivée du fluide caloporteur du réseau de distribution de chaleur et l'autre raccord comme reflux vers ce réseau.

9. Porte selon la revendication 8
**caractérisée**
**en ce qu'**il existe un raccord multifonctions (5) se composant d'une partie supérieure (13) fixée au vantail de porte (1) et d'une partie inférieure (14) fixée à l'encadrement (2),
**en ce que** la partie supérieure (13) se compose d'un manchon distributeur (16) dans lequel débouchent deux tuyaux de raccordement (17, 18) qui sont reliés aux éléments thermoconducteurs (9) du côté de l'ouverture (3) et du côté de la serrure (4),
**en ce qu'**est emboîté dans la partie supérieure (13) un manchon hydraulique de commutation à palier libre (19) présentant des perçages (20) et des trous oblongs disposés tangentiellement, et qu'au choix, par ces ouvertures, le fluide caloporteur coulant à travers le raccord multifonctions n'est pas relié ou alors est relié soit à titre d'alternative soit simultanément, par l'intermédiaire du manchon distributeur (16), aux éléments thermoconducteurs (9) du côté de l'ouverture (3) et du côté de la serrure (4).

10. Porte selon les revendications 4 et 6
**caractérisée**
**en ce que** le vantail de porte (1) est équipé d'un raccord hydraulique au système de distribution du fluide caloporteur, ce raccord étant en même temps façonné comme dispositif contrôlant, en fonction de l'état d'ouverture de la porte, à travers quel(s) côté(s) du vantail de porte (1) le fluide caloporteur coule.

11. Porte selon les revendications 6 et 7
**caractérisée**
**en ce que** le vantail de porte (1) est équipé d'une jonction avec le mur et/ou l'encadrement de porte (2), jonction qui supporte la charge mécanique et établit en même temps le raccord hydraulique avec le système de distribution du fluide caloporteur et qui est en même temps façonnée comme dispositif contrôlant, en fonction de l'état d'ouverture de la porte, à travers quel(s) côté(s) de la porte le fluide caloporteur coule.

12. Porte selon l'une des revendications ci-dessus,
**caractérisée**
**en ce qu'**un ou plusieurs organes thermorégulateurs sont prévus pour la régulation du flux du fluide caloporteur dans les surfaces thermoconductrices intégrées dans les surfaces de la porte et de l'encadrement de porte du côté de l'ouverture (3) et/ou du côté de la serrure (4).

13. Porte selon l'une des revendications ci-dessous,
**caractérisée**
**en ce qu'**elle est façonnée comme porte de meuble.

14. Porte selon l'une des revendications ci-dessus
**caractérisée en ce qu'**elle est équipée d'au moins un dispositif d'aération.

15. Porte selon l'une des revendications ci-dessus
**caractérisée**
**en ce qu'**elle est équipée d'au moins un dispositif de purge.

16. Porte selon l'une des revendications ci-dessus
**caractérisée**
**en ce qu'**elle est équipée d'éléments de radiateurs et de dissipateurs thermiques, tels que thermomètres, thermostats, répartiteurs de frais de chauffage.

17. Porte selon l'une des revendications ci-dessus
**caractérisée**
**en ce qu'**elle est équipée d'éléments fonctionnels de portes, tels que découpes, aérations, judas, fente à lettres, ferrures de sûreté.

18. Porte selon l'une des revendications ci-dessus
**caractérisée**
**en ce qu'**elle est pourvue d'une surface fonctionnelle ou décorative ou d'un revêtement, tel que placage en bois, autres matériaux à paroi mince dérivés du bois, matériaux métalliques, couche de vernis, électrogalvanisation, revêtement de matière plastique ou autres peintures.

19. Porte selon l'une des revendications ci-dessus
**caractérisée**
**en ce qu'**elle est façonnée comme porte à un seul battant, à plusieurs battants, porte palière à battants horizontaux ou verticaux, porte coulissante, porte pivotante, porte pliante, porte de garage.

20. Porte selon l'une des revendications ci-dessus
**caractérisée**
**en ce qu'**une installation de gicleurs d'incendie permettant de remplir l'intérieur de la porte de fluide caloporteur, en fonction d'un signal de détection d'incendie, est intégrée dans le dispositif de séparation thermique.

21. Porte selon l'une des revendications ci-dessus
**caractérisée**
**en ce qu'**elle est équipée de lignes de force et de signalisation électriques.

22. Porte selon l'une des revendications ci-dessus
**caractérisée**
**en ce qu'**elle est équipé de lignes et connexions pour la transmission de courant de force électrique, pour la commande d'acteurs dans le vantail de porte par exemple, et pour la transmission de signaux électriques, pour la commande de capteurs par exemple, ainsi que pour la transmission de forces et de signaux hydrauliques et pneumatiques.

23. Porte selon l'une des revendications ci-dessus
**caractérisée**
**en ce que** le vantail de porte se compose de matière plastique pleine et que les canaux ou tuyaux conduisant l'agent chauffant exothermique et le matériau de remplissage de la porte sont fabriqués en une ou plusieurs pièces.

24. Porte selon la revendication 23
**caractérisée**
**en ce que** le vantail de porte est fabriqué par moulage de la matière plastique pleine.
